# EUROPEAN PATENT APPLICATION

(11) **EP 1 885 022 A1**
(43) Date of publication of application: **06.02.2008**
(21) Application number: 06746671.4
(22) Date of filing: 19.05.2006
(51) Int. Cl.: H01Q 1/24, H01Q 1/12, H01Q 5/01, H01Q 21/30, H04B 1/38, H04B 1/40, H04N 5/44

(54) **CELLULAR PHONE PROVIDED WITH BROADCASTING RECEIVER**

(30) Priority: 20.05.2005 JP 2005148461
(71) Applicant: Matsusita Electric Industrial Co., Ltd., Kadoma-shi, Osaka 571-8501 (JP)
(72) Inventor: YAMAZAKI, Yukari c/o Matsushita electr.Industr., Chuo-ku, Osaka-shi, Osaka 540-6319 (JP); SAITOH, Yutaka c/o Matsushita Electr.Industr., Chuo-ku, Osaka-shi,Osaka 540-6319 (JP); NAGANO, Kenya c/o Matsushita Electr.Industr., Chuo-ku, Osaka-shi, Osaka 540-6319 (JP); SASAKI, Hiroyuki c/o Matsushita Electr.Industr., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2006/310064
(87) International publication number: WO 2006/123790

(57) **Abstract**

It is to provide a mobile telephone device with the broadcasting receiver having high sensitivity over a broad band. A meander element 14 is disposed in parallel to an opening surface 5a of a loop element 5, and the two elements 5 and 14 are connected directly in a feeding point 9 so as to be supplied with power in parallel. Thus, the two elements 5 and 14 operate as antennas taking charge of upper and lower divided bands of a frequency band respectively.

## Description

### Technical Field

The present invention relates to a mobile telephone device with a broadcasting receiver having a broadcasting receiving function.

### Background Art

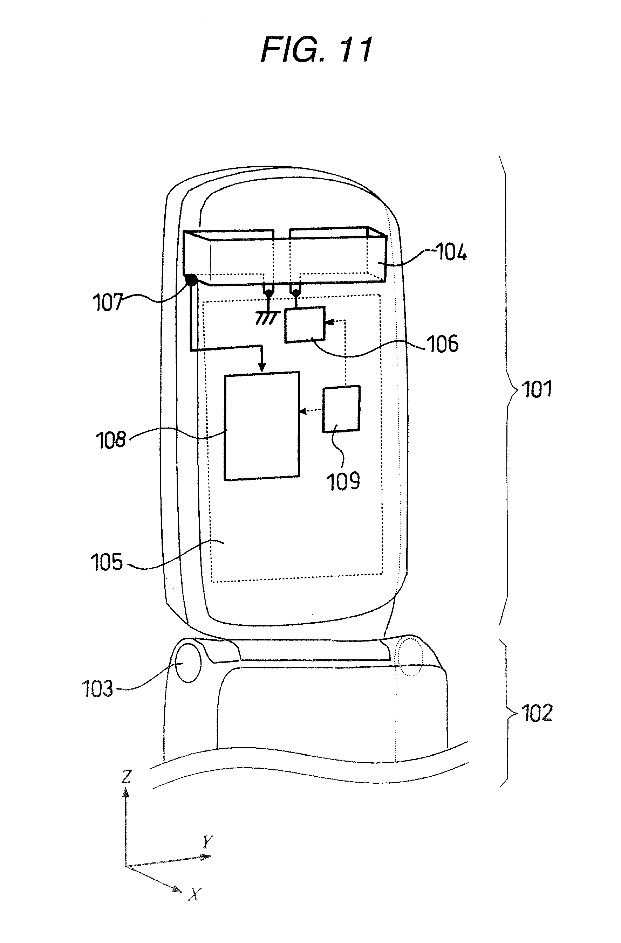

There has been known a technique using a loop antenna as a broadcasting receiving antenna of a mobile telephone device mounted with a television receiving function (for example, see Patent Document 1).
A configuration has been proposed as follows. In a collapsible type mobile telephone device 100 with a broadcasting receiver, an upper housing 101 and a lower housing 102 are openably/closably coupled with each other through a hinge portion 103, as shown in Fig. 11. A loop antenna 104 is disposed in an upper end portion of the housing of the mobile telephone device 100, so as to feed an unbalanced current to a circuit board 105 disposed in the housing. Thus, a part of an antenna current is distributed to a ground pattern of the circuit board 105 or a metal frame formed as the housing, so that the radiation resistance is enhanced to thereby result in improvement in the antenna efficiency.

In such a configuration, the antenna operates as a micro-loop antenna whose loop length is not longer than about 1/10 wavelength in a UHF band which is a TV broadcasting frequency band. Therefore, the operating frequency band of the antenna becomes comparatively narrow to be about 10 MHz in 470 MHz.
As a solution to this, there has been known a configuration in which a variable tuning circuit 106 as shown in Fig. 11 is provided to change the tuning frequency of the loop antenna in accordance with a receiving channel. In the condition that a feeding portion 107 is connected to a television receiving circuit 106, the loop antenna 104 receives television airwaves. In addition, the television receiving circuit 106 is connected to a channel control portion 109 so as to be controlled thereby.
Patent Document 1: JP-A-10-84209

### Disclosure of the Invention

### Problems that the Invention is to Solve

However, when the aforementioned loop antenna 104 in the background art is intended to cover the UHF band which is a TV broadcasting frequency band, for example, the whole of the frequency band of 470 MHz to 710 MHz, it is necessary to increase the frequency change width of the variable tuning circuit 106. Therefore, there is a problem that, for example, the antenna efficiency deteriorates due to loss in a variable capacitance diode.

The present invention was developed in consideration of the aforementioned situation. An object of the invention is to provide a mobile telephone device with a broadcasting receiver having high sensitivity over a broad band.

### Means for Solving the Problems

A mobile telephone device with a broadcasting receiver according to the present invention has a configuration in which the mobile telephone device includes a loop element operating as a broadcasting receiving antenna and provided near an upper end portion of a housing, a variable tuning unit for changing a tuning frequency of the loop element, and a meander element or a helical element operating as a broadcasting receiving antenna and disposed closely to the loop element, and a feeding portion of the loop element and a feeding portion of the meander element or the helical element are connected directly to each other.

With this configuration, the broadcasting receiving antennas are built in so that the antennas can be prevented from becoming obstacles in use. In addition, the meander element is disposed in parallel to the opening surface of the loop element, and the two elements are connected directly in their feeding points so as to be supplied with power in parallel. Thus, the two elements operate as antennas taking charge of upper and lower divided bands of the frequency band respectively. Accordingly, high receiving sensitivity can be always obtained over a broad band.

In addition, the mobile telephone device with a broadcasting receiver according to the invention may have a configuration in which the meander element or the helical element is disposed more closely to the upper end portion of the housing than the loop element.

With this configuration, the broadcasting receiving antennas are built in so that the antennas can be prevented from becoming obstacles in use, and high receiving sensitivity can be always obtained over a broad band.

Further, the mobile telephone device with a broadcasting receiver according to the invention may have a configuration in which the meander element or the helical element is disposed so that a width direction thereof is parallel to an opening surface of the loop element.

With this configuration, the broadcasting receiving antennas are built in so that the antennas can be prevented from becoming obstacles in use, and high receiving sensitivity can be always obtained over a broad band.

Further, the mobile telephone device with a broadcasting receiver according to the invention may have a configuration in which the tuning frequency of the loop element is set to change within a lower band of a broadcasting receiving frequency band by the variable tuning unit, and a resonance frequency of the meander element or the helical element is set within an upper band of the broadcasting receiving frequency band.

With this configuration, the broadcasting receiving antennas are built in so that the antennas can be prevented from becoming obstacles in use, and high receiving sensitivity can be always obtained over a broad band.

Further, a mobile telephone device with a broadcasting receiver according to the invention has a configuration in which the mobile telephone device includes a first loop element operating as a broadcasting receiving antenna and provided near an upper end portion of a housing, a variable tuning unit for changing a tuning frequency of the first loop element, and a second loop element operating as a broadcasting receiving antenna and disposed closely to the loop element.

With this configuration, the broadcasting receiving antennas are built in so that the antennas can be prevented from becoming obstacles in use, and high receiving sensitivity can be always obtained over a broad band.

Further, the mobile telephone device with a broadcasting receiver according to the invention may have a configuration in which the second loop element is disposed so that an opening surface thereof is parallel to an opening surface of the first loop element.

With this configuration, the broadcasting receiving antennas are built in so that the antennas can be prevented from becoming obstacles in use, and high receiving sensitivity can be always obtained over a broad band.

Further, the mobile telephone device with a broadcasting receiver according to the invention may have a configuration in which the second loop element is disposed more closely to the upper end portion of the housing than the first loop element.

With this configuration, the broadcasting receiving antennas are built in so that the antennas can be prevented from becoming obstacles in use, and high receiving sensitivity can be always obtained over a broad band.

Further, the mobile telephone device with a broadcasting receiver according to the invention may have a configuration in which a variable tuning unit is provided in the second loop element.

With this configuration, the broadcasting receiving antennas are built in so that the antennas can be prevented from becoming obstacles in use, and high receiving sensitivity can be always obtained over a broad band.

Further, the mobile telephone device with a broadcasting receiver according to the invention may have a configuration in which a tuning frequency of the second loop element is set to be higher than the tuning frequency of the first loop element.

With this configuration, the broadcasting receiving antennas are built in so that the antennas can be prevented from becoming obstacles in use, and high receiving sensitivity can be always obtained over a broad band.

Further, the mobile telephone device with a broadcasting receiver according to the invention may have a configuration in which the second loop element is formed to have a retractable structure, the first and second loop elements are designed so that an opening surface of the second loop element and an opening surface of the first loop element can be parallel to each other in a state where the second loop element has been pulled out, and a loop length of the second loop element is set to be longer than a loop length of the first loop element.

With this configuration, the antenna can be extended to be used only at the time of receiving a broadcast, and the antenna can be retracted in any other time. Thus, the antenna can be prevented from becoming an obstacle, and high receiving sensitivity can be always obtained over a broad band in use.

### Effect of the Invention

According to the invention, a meander element is disposed in parallel to the opening surface of a loop element, and the two elements are connected directly in their feeding points so as to be supplied with power in parallel. Thus, the two elements operate as antennas taking charge of upper and lower divided bands of a frequency band respectively. It is therefore possible to provide a mobile telephone device with a broadcasting receiver having an effect that high receiving sensitivity performance can be always obtained over a broad band.

### Brief Description of the Drawings

[Fig. 1] A fundamental configuration view of a mobile telephone device with a broadcasting receiver according to a first embodiment.
[Figs. 2] (A) is a side view showing a loop element and a meander element of the mobile telephone device according to the first embodiment; (B) is a front view showing the loop element and the meander element of the mobile telephone device according to the first embodiment; (C) is a side view showing the loop element of the mobile telephone device according to the first embodiment; and (D) is a front view showing the loop element of the mobile telephone device according to the first embodiment.
[Fig. 3] A circuit diagram showing a variable tuning circuit according to the first embodiment.
[Fig. 4] A graph showing VSWR characteristic in the mobile telephone device with a broadcasting receiver according to the first embodiment.
[Fig. 5] A fundamental configuration view of a mobile telephone device with a broadcasting receiver according to a second embodiment.
[Figs. 6] (A) is a side view showing a loop element of the mobile telephone device according to the second embodiment; (B) is a front view showing the loop element of the mobile telephone device according to the second embodiment; and (C) is a sectional view showing the loop element of the mobile telephone device according to the second embodiment.
[Fig. 7] A graph showing VSWR characteristic in the mobile telephone device with a broadcasting receiver according to the second embodiment.
[Figs. 8] (A) is a side view showing a state where an external collapsible loop element of a mobile telephone device according to a third embodiment has been extended; (B) is a front view showing the state where the external collapsible loop element of the mobile telephone device according to the third embodiment has been extended; and (C) is a sectional view showing the state where the external collapsible loop element of the mobile telephone device according to the third embodiment has been extended.
[Figs. 9] (A) is a side view showing a state where the external collapsible loop element of the mobile telephone device according to the third embodiment has been retracted; and (B) is a front view showing a state where the external collapsible loop element of the mobile telephone device according to the third embodiment has been retracted.
[Fig. 10] A graph showing VSWR characteristic in the mobile telephone device with a broadcasting receiver according to the third embodiment.
[Fig. 11] A fundamental configuration view of a mobile telephone device with a broadcasting receiver in the background art.

### Description of Reference Numerals

- 1: upper housing (housing)
- 5: loop element (first loop element)
- 5a: opening surface
- 8: variable tuning circuit (variable tuning unit)
- 9: feeding portion
- 14: meander element
- 26: loop element (second loop element)
- 26a: opening surface

### Best Mode for Carrying Out the Invention

A mobile telephone device with a broadcasting receiver according to embodiments of the invention will be described below with reference to the drawings.

### (First Embodiment)

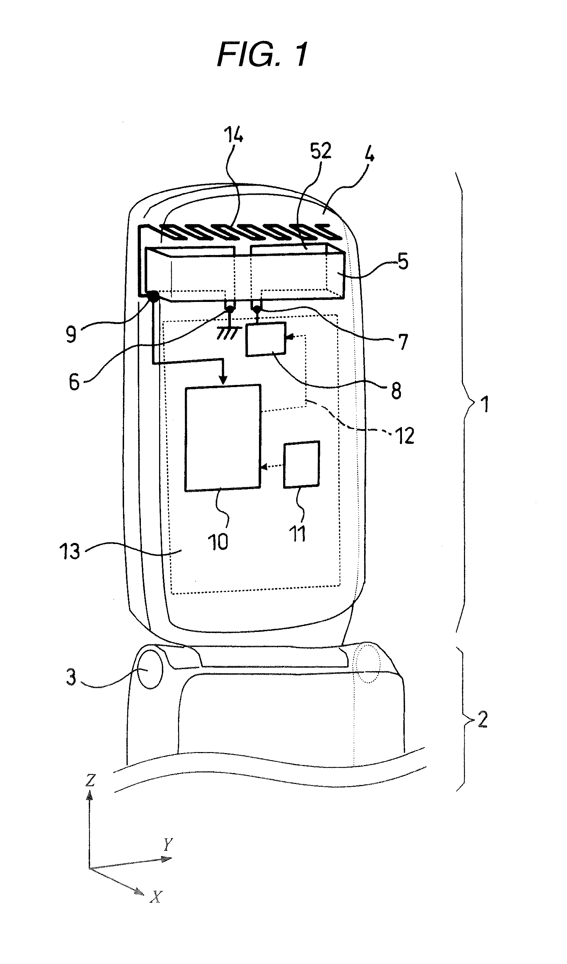

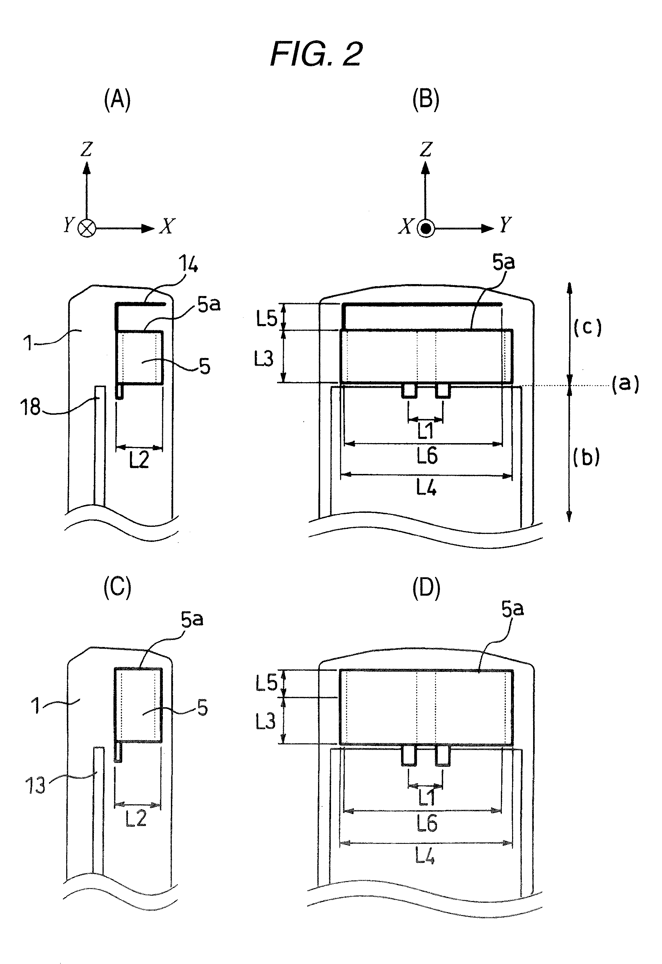

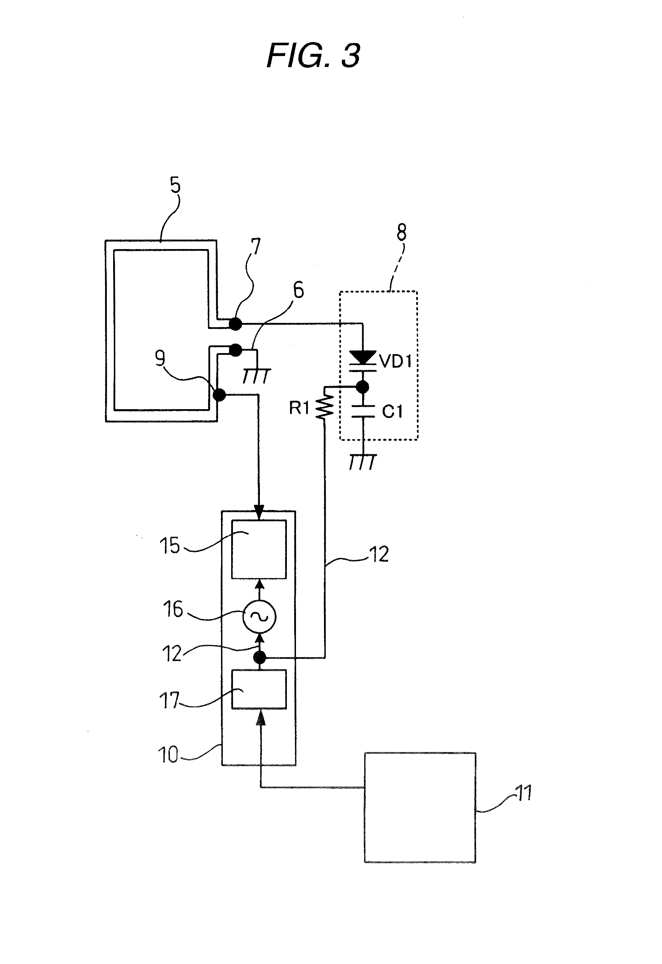

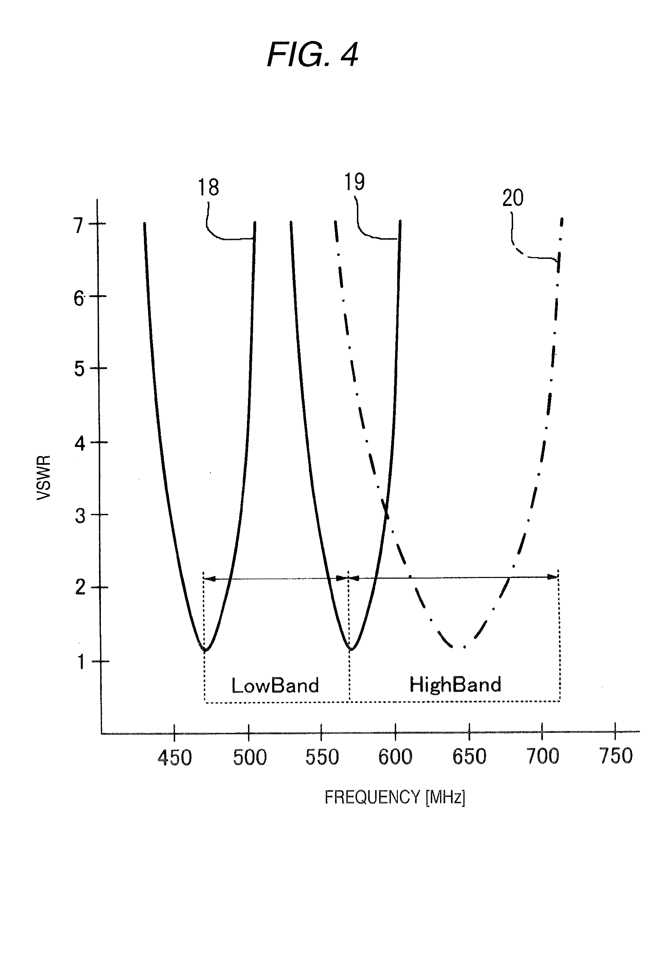

Fig. 1 is a fundamental configuration view of a mobile telephone device with a broadcasting receiver according to a first embodiment of the invention. Fig. 2(A) is a side view showing a loop element of the mobile telephone device according to the first embodiment of the invention, and Fig. 2(B) is a front view of the loop element. Fig. 3 is a circuit diagram showing a variable tuning circuit according to the first embodiment. Fig. 4 is a graph showing VSWR characteristic in the mobile telephone device with a broadcasting receiver according to the first embodiment.

As shown in Fig. 1, the mobile telephone device with a broadcasting receiver according to this embodiment is a collapsible type mobile telephone device having a structure in which an upper housing 1 and a lower housing 2 are rotatably supported by a hinge portion 3. The mobile telephone device has a loop element 5 provided near an upper end portion of the housing 1 so as to operate as a broadcasting receiving antenna, a variable tuning circuit 8 serving as a variable tuning unit for changing the tuning frequency of the loop element 5, and a meander element 14 (or a helical element) disposed closely to the loop element 5 so as to operate as a broadcasting receiving antenna. The loop element 5 and the meander element 14 (or the helical element) are connected directly at their feeding portion 9.

That is, a back cover 4 of the upper housing 1 is made of a product molded out of an electrically insulating resin material, and the lower housing 2 is also made of a product molded out of an electrically insulating resin material. The loop element 5 serving as a loop antenna element is disposed in the upper end of the upper housing 1. The loop element 5 operates as a television receiving built-in antenna. The loop element 5 is, for example, constituted by bending and shaping a conductor plate measuring 8 mm in width L3 and 100 mm in length. For example, an opening surface 5a of the loop measures 45 mm (L6) by 5 mm (L2). The loop length in this case is about 0.15 wavelength in a UHF band (470 MHz) of television broadcasting service.

The loop element 5 is disposed so that the opening surface 5a thereof is parallel to the thickness direction and the width direction of the mobile telephone device. In Fig. 1, the opening surface 5a of the loop element 5 is parallel to the XY plane. In this case, the loop element 5 has high sensitivity to horizontal polarization (Y-direction polarization) components. One end of the loop element 5 is grounded to high-frequency ground potential of a circuit board 13 inside the upper housing 1 at a grounding point 6.
The variable tuning circuit 8 serving as a variable tuning circuit unit which is a frequency control unit is connected to the other end 7 of the loop element 5 which is not connected to the grounding point 6. The resonance frequency of the loop element 5 is controlled in a range from about 470 MHz to about 570 MHz, which is a lower band of a television broadcasting frequency band ranging from 470 MHz to 710 MHz, by the variable tuning circuit 8.

The feeding portion 9 is disposed in a position at a predetermined distance (e.g. about 10 mm) from the grounding point where the loop element 5 is grounded. Thus, the impedance of the feeding portion 9 is set to be, for example, 50 Ω or 75 Ω. When the feeding portion 9 is connected to a television receiving circuit 10, the loop element 5 receives television airwaves. A channel control portion 11 sets a reception channel of the television receiving circuit 10. The variable tuning circuit 8 is controlled by a tuning voltage 12 generated by the television receiving circuit 10. Thus, the tuning frequency of the loop element 5 is set to be a frequency corresponding to the reception channel, and particularly set to change within the lower band of the broadcasting receiving frequency band.

The potable telephone with a broadcasting receiver according to the first embodiment is characterized by the meander element 14, which is a television receiving built-in antenna operating together with the loop element 5. The meander element 14 is, for example, constituted by a conductor whose wire diameter is about 0.5 mm and which is shaped into meanders measuring 5 mm in width, 35 mm in length and 1 mm in pitch. The meander element 14 is disposed more closely to the upper end portion than the loop element 5, so that the axial direction of the meander element 14 is parallel to the width direction of the mobile telephone device, that is, the Y-axis direction, and the width direction of the meander element 14 is parallel to the thickness direction of the mobile telephone device, that is, the X-axis direction. In this event, the opening surface 5a of the loop element 5 is parallel to the width direction of the meander element 14. In addition, the meander element 14 is disposed at a distance L5 of about 2 mm from the loop element 5. The feeding end of the meander element 14 is connected directly to the feeding portion 9 of the loop element 5 so as to be supplied with power in parallel to the loop element 5. The resonance frequency of the meander element 14 is set within the upper band of the aforementioned broadcasting receiving frequency band.

Next, the relationship between the tuning frequency of the loop element 5 and the resonance frequency of the meander element 14 will be described with reference to Figs. 3 and 4 showing VSWR characteristics at the feeding point 7.
First, description will be made on the case where a reception channel in LowBand (e.g. 470-570 MHz in frequency) shown in Fig. 4 is set.
As shown in Fig. 3, a variable capacitance diode VD1 is connected in series with the end portion 7 of the loop element 5 which is not connected to the ground, and the variable capacitance diode VD1 is grounded to the high frequency ground of the circuit board 13 through a capacitor C1. The capacitance value of the capacitor C1 is set suitably so that the resonance frequency of the loop element 5 depending on the variable tuning circuit 8 changes in accordance with the television reception channel, that is, tracks the television reception channel.

For example, the capacitance value of the capacitor C1 is set to have VSWR characteristic shown by the reference numeral 18 in Fig. 4 when a reverse bias voltage of the variable capacitance diode VD1, that is, a tuning voltage 12 is 0.5 V, and to have VSWR characteristic shown by the reference numeral 19 in Fig. 4 when the tuning voltage 12 is 2.7 V.
When the tuning voltage 12 is changed in accordance with the reception channel of the television receiving circuit 10, the tuning frequency of the loop element 5 changes within a range of 470-570 MHz in accordance with the reception channel.

When the change range of the tuning frequency of the loop element 5 is set thus to be about 470-570 MHz, considerable deterioration in antenna efficiency can be prevented by use of a practical variable capacitance diode. However, if, for example, the capacitance change ratio of the variable capacitance diode is enhanced to obtain a broader variable frequency range of 470-710 MHz, the antenna efficiency will generally deteriorate due to increase in series-equivalent resistance of the variable capacitance diode.

In order to solve this problem, parameters including an element length etc. are set so that the resonance frequency of the meander element 14 will be about 640 MHz. The meander element 14 designed thus shows a broader band characteristic than the loop element 5. High antenna efficiency can be obtained in HighBand, that is, a frequency range of about 570-710 MHz.
The resonance frequency of the meander element 14 does not depend on the variable tuning circuit 8 of the loop element 5, but the state of VSWR characteristic shown by the reference numeral 20 in Fig. 4 can be always obtained.

This configuration can obtain high antenna efficiency in reception at 470-570 MHz due to the loop element 5 and in reception at 570-710 MHz due to meander element 14. Thus, high receiving sensitivity can be obtained all over the frequency band.
Here, assume that the antenna configuration is designed to only include the loop element 5 extended to have an element width of L3+L5=10 mm using the space where the meander element 14 was disposed, as shown in Figs. 2(C) and (D). The element width of the loop element 5 shown in Figs. 2(A) and (B) is merely narrower than the element width of that shown in Figs. 2(C) and (D) by L5 (=2 mm), but the area of the opening surface 5a is not changed. Therefore, there is little difference in bandwidth between the two loop elements.
Accordingly, in the configuration of Figs. 2(A) and (B), high receiving sensitivity can be obtained all over the frequency band without increasing the volume of the space occupied by the built-in antennas.

In this manner, the mobile telephone device according to this first embodiment is characterized in that the meander element 14 is disposed in parallel to the opening surface 5a of the loop element 5, and the two elements are connected directly at their feeding points so as to be supplied with power in parallel, so that the two elements operate as antennas taking charge of upper and lower divided bands of the frequency band respectively. Accordingly, high receiving sensitivity can be obtained all over the frequency band.

Even when the resonance frequency of the meander element 14 is set on the LowBand side, that is, to be 470-570 MHz, while the tuning frequency of the loop element 5 is set on the HighBand side, a constant effect can be obtained. In this case, the wavelength of LowBand taken charge of by the meander element 14 is however longer than that of HighBand. Thus, the size of the meander element is increased. For this reason, it is necessary to secure a space for the increased size.
As for the position where the meander element 14 is disposed, if the meander element 14 is disposed more closely to the upper end portion, i.e. more on the Z-side, than the loop element 5, an open space for the meander element 14 which is an electric-field antenna element can be increased so that increase in radiation resistance and increase in bandwidth can be expected. On the other hand, for the loop element 5 which is a magnetic-field antenna element, deterioration of performance caused by the meander element 14 is extremely low even when the meander element 14 lies on the upper end portion side.
Although this embodiment has been described on the case where the meander element 14 is used as an element to be connected to the loop element 5 in parallel, a helical element formed into a helical shape in accordance with a space where the helical element will be built in the housing may be used instead.
The shape of the mobile telephone device is not limited to a collapsible shape. Similar effect can be obtained even when the shape of the mobile telephone device is a straight shape or a slide shape.

### (Second Embodiment)

Next, description will be made on a second embodiment of the present invention. Portions in common with the aforementioned portions are referenced correspondingly, and redundant description thereof will be omitted.

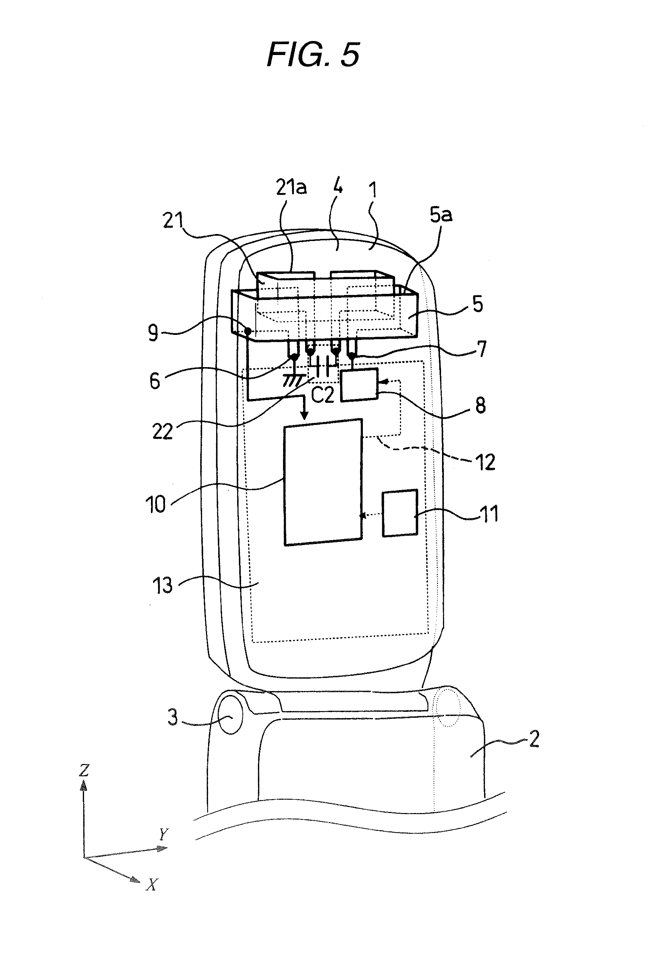

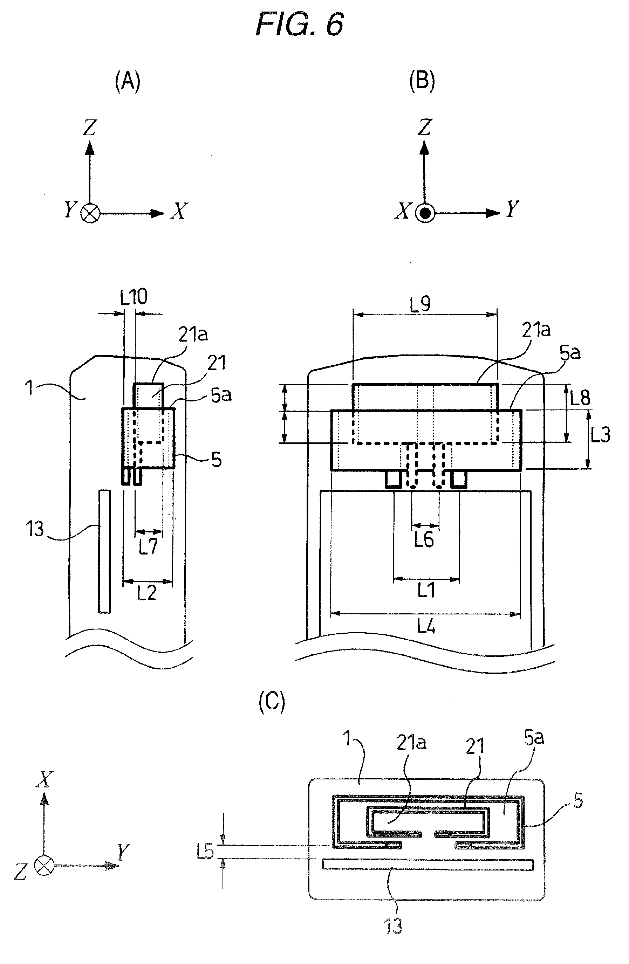

Figs. 5 and 6 are fundamental configuration views of a mobile telephone device with a broadcasting receiver according to the second embodiment of the present invention. A loop element 21 as a feature of the mobile telephone device with a broadcasting receiver according to the second embodiment is a television receiving built-in antenna operating together with a loop element 5. This mobile telephone device with a broadcasting receiver has the loop element 5 serving as a first loop element provided near an upper end portion of a housing 1 so as to operate as a broadcasting receiving antenna, a variable tuning circuit 8 serving as a variable tuning unit for changing the tuning frequency of the first loop element 5, and the loop element 21 serving as a second loop element disposed closely to the loop element 5 so as to operate as a broadcasting receiving antenna.

That is, the loop element 21 is, for example, constituted by bending and shaping a conductor plate measuring 5 mm in width (L8) and 60 mm in length. For example, an opening surface 21a of the loop measures 27 mm (L9) by 3 mm (L7). The loop length in this case is about 0.1 wavelength in a UHF band (470 MHz) of television broadcasting service.

The loop element 21 is disposed inside the loop element 5 so that the opening surface 21 a thereof is parallel to the thickness direction and the width direction of the mobile telephone device, and disposed in parallel to the opening surface 5a of the loop element 5. The distance between the loop element 21 and the loop element 5 is 1 mm (L10) in the thickness direction of the mobile telephone device.
In this event, the loop element 21 is disposed to project from the loop element 5 by 3 mm (L11) in the longitudinal direction (Z-direction) of the mobile telephone device. That is, the loop element 21 is provided to be disposed more closely to the upper end portion of the housing 1 than the loop element 5 and overlap the loop element 5 by 2 mm (L12).

A capacitor 22 is connected in series with an element terminal portion of the loop element 21 so that the inductance of the loop element 21 and the capacitor 22 operate as a series resonant circuit.
In this manner, the opening surfaces 5a and 21a of the two loop elements 5 and 21 are disposed in parallel to each other and at a proper distance from each other. Thus, the two loop elements 5 and 21 can operate in the state where they are electromagnetically coupled.
A variable tuning unit may be provided in the loop element 21. It is also desired that the tuning frequency of the loop element 21 is set to be higher than the tuning frequency of the loop element 5.

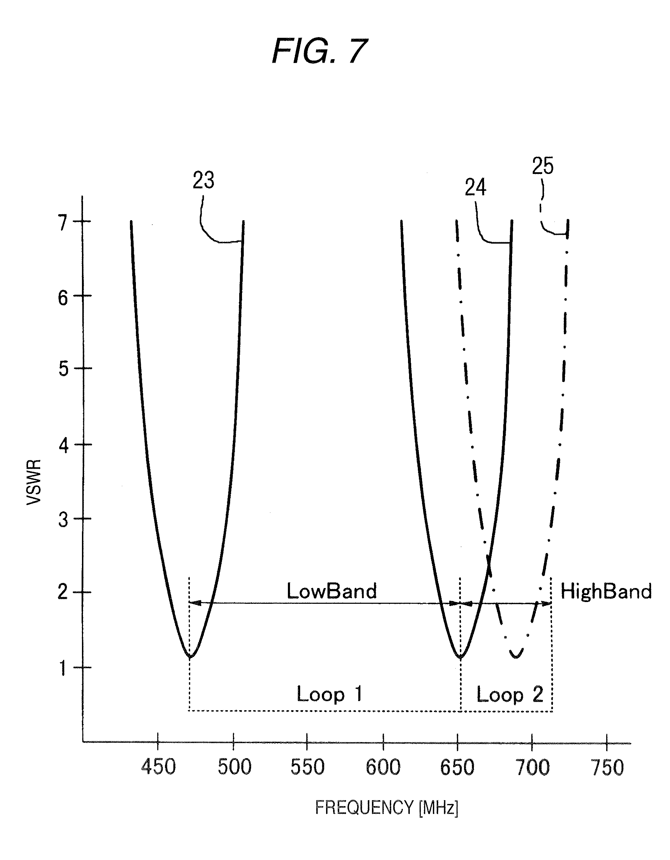

Next, the relationship between the tuning frequency of the loop element 5 and the tuning frequency of the loop element 21 will be described with reference to Fig. 7 showing VSWR characteristic at the feeding portion 9.
First, description will be made on the case where a reception channel in LowBand (e.g. 470-650 MHz in frequency) shown in Fig. 7 is set.
In the loop element 5, for example, the capacitance value of a capacitor C1 is set to have VSWR characteristic shown by the reference numeral 23 in Fig. 7 when a reverse bias voltage of a variable capacitance diode VD1, that is, a tuning voltage 12 is 0.5 V, and to have VSWR characteristic shown by the reference numeral 24 in Fig. 7 when the tuning voltage 12 is 2.7 V.

When the tuning voltage 12 is changed in accordance with the reception channel of a television receiving circuit 10, the tuning frequency of the loop element 5 changes within a range of 470-650 MHz in accordance with the reception channel.
When the change range of the tuning frequency of the loop element 5 is set thus to be about 470-650 MHz, deterioration in antenna efficiency can be suppressed greatly by use of a practical variable capacitance diode. However, if, for example, the capacitance change ratio of the variable capacitance diode is enhanced to obtain a broader variable frequency range of 470-710 MHz, the antenna efficiency will generally deteriorate due to increase in series-equivalent resistance of the variable capacitance diode.

In order to solve this problem, parameters including an element length, a capacitance value C2 of a capacitor 22, etc. are set so that the resonance frequency of the loop element 21 will be about 680 MHz. The loop element 21 designed thus can obtain high antenna efficiency in a higher tuning frequency (HighBand) than the tuning frequency of the loop element 5, that is, a frequency range of about 650-710 MHz.
The resonance frequency of the loop element 21 does not depend on the variable tuning circuit 8 of the loop element 5, but the state of the VSWR characteristic shown by the reference numeral 25 in Fig. 7 can be always obtained.

The configuration described above can obtain high antenna efficiency in reception at 470-650 MHz due to the loop element 5 and in reception at 650-710 MHz due to the loop element 21. Thus, high receiving sensitivity can be obtained all over the frequency band.
In this manner, the mobile telephone device according to this second embodiment is characterized in that the loop element 21 is disposed inside the loop element 5 and in parallel to the opening surface 21 a, and the two loop elements 5 and 21 operate as antennas taking charge of upper and lower divided bands of the frequency band respectively. Accordingly, high receiving sensitivity can be obtained all over the frequency band.

The capacitor 22 may be used as a variable capacitance diode so as to form a variable tuning circuit due to a tuning voltage applied thereto. Thus, the tuning frequency of the loop element 21 can be also changed. In this case, in order to simplify the circuitry, it is desired to share the tuning voltage 12 between the loop element 5 and the loop element 21. When the tuning frequency of the loop element 21 is set to change within HighBand, the bandwidth of LowBand can be narrowed if the bandwidth of HighBand is extended, for example, to about 100 MHz. Thus, deterioration in antenna efficiency can be suppressed more greatly.
The layout of the two loop elements 5 and 21 is not limited to the illustrated one in this embodiment. Any layout can be used if electromagnetic coupling with a proper degree of coupling can be obtained.

### (Third Embodiment)

Next, description will be made on a third embodiment of the present invention. Portions in common with the aforementioned portions are referenced correspondingly, and redundant description thereof will be omitted.

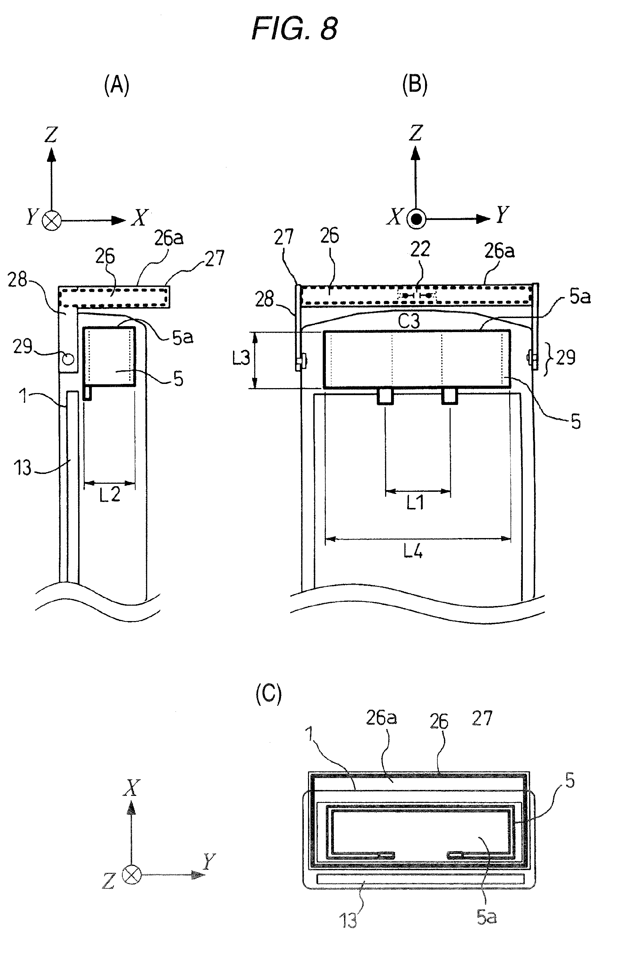

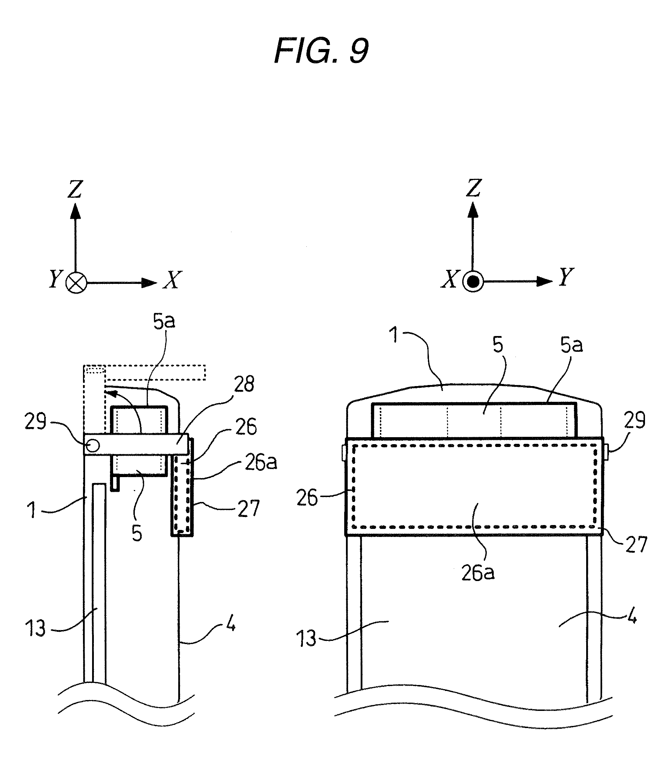

Figs. 8 and 9 are fundamental configuration views of a mobile telephone device with a broadcasting receiver according to the third embodiment of the present invention. Figs. 8 show a state where an external loop element 26 has been pulled out, and Figs. 9 show a state where the external loop element 26 has been folded in.
Here, assume that the external loop element 26 is pulled out and brought into the state shown in Figs. 8 only when a television broadcast is watched, and the external loop element 26 is folded in as shown in Figs. 9 when no television broadcast is watched.

The external loop element 26 as a feature of the mobile telephone device with a broadcasting receiver according to this third embodiment is designed so that a loop element 21 serving as the aforementioned second loop element has a retractable structure such that an opening surface 21 a of the loop element 21 can be made parallel to an opening surface 5a of a loop element 5 serving as the first loop element in the state where the loop element 21 has been pulled out, while the loop length of the loop element 21 is set to be longer than the loop length of the loop element 5.

That is, the external loop element 26 is a television receiving antenna operating together with the loop element 5. The external loop element 26 is covered with a cover 27, and the external loop element 26 and the cover 27 are fixed to a fixing jig 28. The fixing jig 28 is formed to be rotatably supported on a side surface of an upper housing 1 through a rotating shaft 29. The cover 27, the fixing jig 28 and the rotating shaft 29 are made of parts molded out of an electrically insulating resin material.

The loop length of the external loop element 26 is set to be longer than the loop length of the loop element 5. For example, the former is set to be about twice as long as the latter. The external loop element 26 is, for example, constituted by bending and shaping a conductor plate measuring 2 mm in width and 115 mm in length. For example, an opening surface 26a of the loop measures 50 mm by 7.5 mm. The loop length in this case is about 0.18 wavelength in a UHF band (470 MHz) of television broadcasting service.

In the state shown in Figs. 8, the external loop element 26 is disposed outside the upper end portion of the upper housing 1 so that the opening surface 26a thereof is parallel to the thickness direction and the width direction of the mobile telephone device. That is, the opening surface 26a of the external loop element 26 is parallel to the opening surface 5a of the loop element 5.
In this event, the external loop element 26 is disposed to project from the loop element 5, for example, by 10 mm in the longitudinal direction (Z-direction) of the mobile telephone device. That is, the opening surfaces 5a and 26a of the two loop elements 5 and 26 are disposed in parallel to each other and at a proper distance from each other. Thus, electromagnetic coupling can be secured between the two loop elements 5 and 26.
A capacitor 22 is connected in series with an element terminal portion of the external loop element 26 so that the inductance of the external loop element 26 and the capacitor 22 operate as a series resonant circuit.

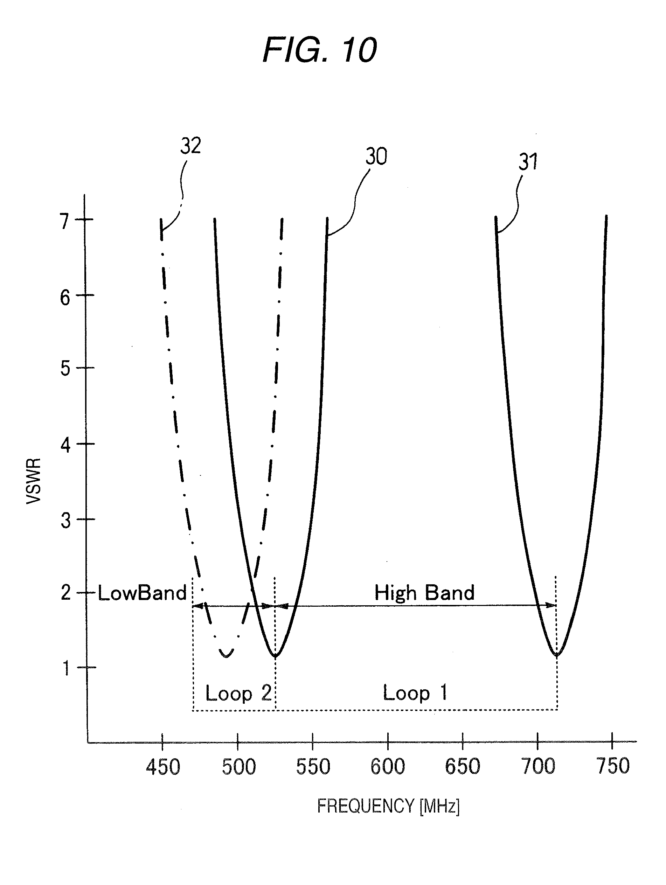

Next, the relationship between the tuning frequency of the loop element 5 and the resonance frequency of the external loop element 26 will be described with reference to Fig. 10 showing VSWR characteristic in the state of Figs. 8.
First, description will be made on the case where a reception channel in HighBand (e.g. 530-710 MHz in frequency) shown in Fig. 10 is set.
In the loop element 5, for example, a capacitance value C1 of the capacitor 22 is set to have VSWR characteristic shown by the reference numeral 30 in Fig. 10 when a reverse bias voltage of a variable capacitance diode VD1, that is, a tuning voltage 12 is 0.5 V, and to have VSWR characteristic shown by the reference numeral 31 in Fig. 10 when the tuning voltage 12 is 2.7 V.

When the tuning voltage 12 is changed in accordance with the reception channel of a television receiving circuit 10, the tuning frequency of the loop element 5 changes within a range of 530-710 MHz in accordance with the reception channel.
When the change range of the tuning frequency of the loop element 5 is set thus to be about 530-710 MHz, significant deterioration in antenna efficiency can be prevented by use of a practical variable capacitance diode. However, if, for example, the capacitance change ratio of the variable capacitance diode is enhanced to obtain a broader variable frequency range of 470-710 MHz, the antenna efficiency will generally deteriorate due to increase in series-equivalent resistance of the variable capacitance diode.

In order to solve this problem, parameters including an element length, a capacitance value C3 of the capacitor 22, etc. are set so that the resonance frequency of the external loop element 26 will be about 490 MHz.
Here, the area of the opening surface 26a of the external loop element 26 is set to be larger than the area of the opening surface 5a of the loop element 5, and disposed to project over the upper end surface of the upper housing 1. Accordingly, high antenna efficiency can be obtained even in LowBand, that is, in a low frequency range of about 470-530 MHz.

The resonance frequency of the external loop element 26 does not depend on the variable tuning circuit 8 of the loop element 5, but the state of the VSWR characteristic shown by the reference numeral 32 in Fig. 10 can be always obtained.
The configuration described above can obtain high antenna efficiency in reception at 470-530 MHz due to the external loop element 26 and in reception at 530-710 MHz due to the loop element 5. Thus, high receiving sensitivity can be obtained all over the frequency band.

In this manner, the mobile telephone device according to this third embodiment is characterized in that the external loop element 26 is disposed on the upper end portion side of the loop element 5 so that the opening surface 26a is parallel thereto, and the two loop elements 5 and 26 operate as antennas taking charge of upper and lower divided bands of the frequency band respectively. Accordingly, high receiving sensitivity can be obtained all over the frequency band.

When no television broadcast is watched, the external loop element 26 is turned around the rotating shaft 29 and folded in as shown in Figs. 9. Thus, the external loop element 26 can be prevented from projecting and becoming an obstacle.
In the case shown in Figs. 9, the opening surface 26a of the external loop element 26 is disposed in parallel to a back cover 4 of the upper housing 1. That is, the opening surface 26a of the external loop element 26 is disposed perpendicularly to the opening surface 5a of the loop element 5. Thus, there is little electromagnetic coupling between the loop element 5 and the external loop element 26. Accordingly, the external loop element 26 has no influence on the operation of the loop element 5. In reception at 530-710 MHz, it is therefore unnecessary to pull out the external loop element 26. Thus, the mobile telephone device can be used with no projecting portion.
The structure for pulling out the external loop element 26 is not limited to the illustrated one in this embodiment. For example, any structure can be used if it is a structure which projects outside a loop element built in a housing and which can implement an external loop capable of obtaining electromagnetic coupling, such as a structure which can be pulled out in a sliding manner.

The present application is based on a Japanese patent application (Patent Application No. 2005-148461) filed on May 20, 2005, and contents thereof is incorporated herein by reference.

### Industrial Applicability

As described above, a mobile telephone device with a broadcasting receiver according to the present invention has a configuration in which a meander element is disposed in parallel to an opening surface of a loop element, and the two elements are connected directly in their feeding points so as to be supplied with power in parallel. Thus, the two elements operate as antennas taking charge of upper and lower divided bands of a frequency band respectively. Accordingly, there is an effect that high receiving sensitivity performance can be always obtained over a broad band. The mobile telephone device is useful as a mobile telephone device with a broadcasting receiver having a broadcasting receiving function, or the like.

## Claims

1. A mobile telephone device with a broadcasting receiver, comprising:
a loop element which operates as a broadcasting receiving antenna and is provided near an upper end portion of a housing;
a variable tuning unit which changes a tuning frequency of the loop element; and
a meander element or a helical element which operates as a broadcasting receiving antenna and is disposed closely to the loop element,
wherein a feeding portion of the loop element and a feeding portion of the meander element or the helical element are connected directly to each other.

2. The mobile telephone device with the broadcasting receiver according to Claim 1, wherein the meander element or the helical element is disposed more closely to the upper end portion of the housing than the loop element.

3. The mobile telephone device with the broadcasting receiver according to Claim 1 or 2, wherein the meander element or the helical element is disposed so that a width direction thereof is parallel to an opening surface of the loop element.

4. The mobile telephone device with the broadcasting receiver according to Claim 1, 2 or 3, wherein the tuning frequency of the loop element is set to change within a lower band of a broadcasting receiving frequency band by the variable tuning unit; and
wherein a resonance frequency of the meander element or the helical element is set within an upper band of the broadcasting receiving frequency band.

5. A mobile telephone device with a broadcasting receiver, comprising:
a first loop element which operates as a broadcasting receiving antenna and is provided near an upper end portion of a housing;
a variable tuning unit which changes a tuning frequency of the first loop element; and
a second loop element which operates as a broadcasting receiving antenna and is disposed closely to the loop element.

6. The mobile telephone device with the broadcasting receiver according to Claim 5, wherein the second loop element is disposed so that an opening surface thereof is parallel to an opening surface of the first loop element.

7. The mobile telephone device with the broadcasting receiver according to Claim 5 or 6, wherein the second loop element is disposed more closely to the upper end portion of the housing than the first loop element.

8. The mobile telephone device with the broadcasting receiver according to Claim 5, 6 or 7, wherein a variable tuning unit is provided in the second loop element.

9. The mobile telephone device with the broadcasting receiver according to Claim 7 or 8, wherein a tuning frequency of the second loop element is set to be higher than the tuning frequency of the first loop element.

10. The mobile telephone device with the broadcasting receiver according to Claim 5, 6, 7 or 8, wherein the second loop element is formed to have a retractable structure;
wherein the first and second loop elements are designed so that an opening surface of the second loop element and an opening surface of the first loop element can be parallel to each other in a state where the second loop element is pulled out; and
wherein a loop length of the second loop element is set to be longer than a loop length of the first loop element.
